# EUROPÄISCHE PATENTSCHRIFT

(11) **EP 1 832 175 B1**
(45) Veröffentlichungstag und Bekanntmachung des Hinweises auf die Patenterteilung: **18.06.2008**
(21) Anmeldenummer: 07006118.9
(22) Anmeldetag: 26.07.2005
(51) Int. Cl.: A22C 11/00, A22C 13/00, A23L 1/317, A23B 4/00, A23B 4/023, A23B 4/044, A23B 4/06

(54) **Verfahren zur Herstellung von Speck geeignet zur Umhüllung**
Process for the preparation of bacon suitable for casings
Procédé de préparation de lard susceptible d'être utilisé pour envelopper

(30) Priorität: 27.07.2004 AT 12802004
(43) Veröffentlichungstag der Anmeldung: 12.09.2007
(62) Teilanmeldung aus: 05450128.3
(73) Patentinhaber: Gierlinger, Johann, 4040 Linz (AT)
(72) Erfinder: Gierlinger, Johann, 4040 Linz (AT)
(74) Vertreter: Hübscher, Helmut

(56) Entgegenhaltungen:
- WO-A-96/25854
- DE-A1- 1 952 955
- DE-A1- 3 437 441
- US-A- 3 901 981

## Beschreibung

Speck und insbesondere Räucherspeck findet bei der Herstellung bzw. Zubereitung von Lebensmitteln eine vielfache Verwendung. Fein aufgeschnittener Speck wird unter anderem als Umhüllung von Fleischwaren oder als Auflage auf Bratengut z. B. mageres Geflügel verwendet. Eine vielfache Anwendung ist bei Umhüllungen von Würstchen, z. B. so genannten Berner Würstchen, gegeben.

Für die Umwicklung solcher Würstchen wird gekochter heiß geräucherter oder halb gegarter Bauchspeck verwendet. Der vorgekochte oder in anderer Form halbgegarte Bauchspeck hat eine geringe Eigenfestigkeit und muß daher relativ dick in Scheiben geschnitten werden, wobei die mögliche Dicke dieser Scheiben über 2 mm beträgt. Der Speck haftet auch nicht ausreichend an den Würstchen. Wegen der Heißbehandlung, z. B. bei einer Kammertemperatur von 80° C, verliert der Speck eine ausreichende Geschmeidigkeit. Auch andere Umhüllungen für Fleischwaren und gegebenenfalls Würstchen entsprechend zumindest nicht voll den Anforderungen. So ist aus der DE-A 34 37 441 eine Umhüllung bekannt, die aus Speckschwarte besteht, an der noch eine Speckschicht haftet. Diese Umhüllung wird mit der Schwartenseite, also mit nach außen weisender Speckschicht um die jeweilige Fleischware gelegt und muss in ihrer Lage an der Fleischware durch ein Netz oder ein ähnliches Haltemittel gesichert werden. Aus der DE-A 19 52 955 ist ein Speckersatz bekannt, bei dessen Herstellung aus zerkleinerten gebrühten Schwarten, Fett, Eiweiß und Wasser in einem Heißverfahren bei über 75° C im Kutter eine homogenisierte, pastöse Masse erzeugt, in Gefäße abgefüllt und nach der Abkühlung auf z. B. 5° C zu einer schnittfesten Masse wird.

Zu erwähnen ist, dass es an und für sich bekannt ist, bei der Herstellung von Schinken gemäß der US-A 3 901 981 während des Zuschnittes und der Vorbehandlung mit relativ niedrigen Temperaturen, z. B. beim Räuchervorgang, um während dieser Zeit eine Koagulation zu verhindern. Anschließend werden die vorbereiteten Schinkenstücke in Formen gepresst, wobei sie wegen der erwähnten Vorbehandlung die aufgeprägte Form auch nach der Entnahme beibehalten und weiterbehandelt werden können. Auch bei einem anschlie-ßenden Erhitzungsvorgang wird bei relativ niedrigen Temperaturen gearbeitet.

Auch ein Verfahren nach der WO 96/25854 für die Herstellung von Räucherspeck nützt die plastische Verformbarkeit des Rohmaterials im kalten Zustand zur Formgebung aus, wonach dieses in üblicher Weise durch Heißräucherung bei einer Temperatur von 60 bis 65° C fertig behandelt und im Bedarfsfall eingefroren werden kann.

Aufgabe der Erfindung ist die Schaffung eines Verfahrens zur Herstellung von Speck, der für Umwicklungen, Umhüllungen und Auflagen gut geeignet ist, sich vom umhüllten oder belegten Material nicht ablöst, im Bedarfsfall sehr dünn geschnitten werden kann und während der Handhabung geschmeidig bleibt.

Die gestellte Aufgabe wird prinzipiell dadurch gelöst, daß Schweinebauch entbeint, zugeschnitten, mit Salzlake injiziert, getumbelt und bei einer Kammertemperatur unter 48° C, insbesondere etwa 40° C für einige, z. B. für 5 bis 6 Stunden kalt geräuchert, anschließend durch Einpressen in Formen und Lagerung in der Form bei Kühltemperaturen unter - 10° C gelagert und nach der Entnahme aus der Form auf einer Kerntemperatur unter dem Gefrierpunkt, z. B. bei - 5 bis - 8° C gehalten wird, sodass er in diesem Zustand in Scheiben oder Streifen unter 2 mm Dicke, vorzugsweise 1,2 bis 1 mm Dicke geschnitten werden kann.

Der so hergestellte Speck ist geschmeidig und hat eine höhere Stabilität, sowie verbesserte Haftung z. B. am Würstchen. Die Möglichkeit, den Speck in sehr dünne Scheiben bzw. Streifen zu schneiden und auch die besondere Konsistenz des auf diese Weise erhaltenen Specks eröffnet zusätzliche Verwendungsmöglichkeiten in der Küche, z. B. als Speckhülle oder Auflage für mageres Geflügel. Für andere Verwendungen ist es auch möglich, den Speck etwas dicker zu schneiden und z. B. als Bratspeck zu verwenden.

In Weiterbildung des Herstellungsverfahrens für die Speckerzeugung wird vorgesehen, daß als Preßformen in ihrer Grundform rechteckig-prismatische Wannen mit in die Wannenöffnung passenden Einsatzteilen, insbesondere Einsatzdeckel verwendet werden, welch letztere für die Auflage auf den in die Wanne eingelegten, zugeschnittenen Schweinebauch bestimmt sind, wobei für die Stapelung der beschickten Wannen in einer Presse die gegebenenfalls durch Einlagen zusätzlich einstellbare, wirksame Höhe der Einsatzteile so gewählt ist, daß sie bei jeder vorkommenden Dicke eines eingelegten zugeschnittenen Schweinebauches auch nach dem Preßvorgang über den oberen Wannenrand vorstehen und den Preßdruck von der jeweils aufgesetzten Wanne auf das Preßgut der unteren Wanne übertragen.

Durch Anwendung dieses Verfahrensschrittes fällt der fertige Speck in gleichmäßigen, etwa ziegelartigen Formen an und benötigt keinen Randzuschnitt mehr. Durch die gleichmäßige Pressung werden auch die Konsistenz und auch der Geschmack verbessert.

## Patentansprüche

1. Verfahren zur Herstellung von Speck, insbesondere für Umhüllungen oder Auflagen von Fleisch und Fleischwaren, z. B. Würstchen, **dadurch gekennzeichnet, daß** Schweinebauch entbeint, zugeschnitten, mit Salzlake injiziert, getumbelt und bei einer Kammertemperatur unter 48° C, insbesondere etwa 40° C für einige, z. B. für 5 bis 6 Stunden kalt geräuchert, anschließend durch Einpressen in Formen und Lagerung in der Form bei Kühltemperaturen unter - 10° C gelagert und nach der Entnahme aus der Form auf einer Kerntemperatur unter dem Gefrierpunkt, z. B. bei - 5 bis - 8° C gehalten wird, so daß er in diesem Zustand in Scheiben oder Streifen unter 2 mm Dicke, vorzugsweise 1,2 bis 1 mm Dicke geschnitten werden kann.

2. Verfahren nach Anspruch 1, **dadurch gekennzeichnet, daß** als Preßformen in ihrer Grundform rechteckig-prismatische Wannen mit in die Wannenöffnung passenden Einsatzteilen, insbesondere Einsatzdeckel verwendet werden, welch letztere für die Auflage auf den in die Wanne eingelegten, zugeschnittenen Schweinebauch bestimmt sind, wobei für die Stapelung der beschickten Wannen in einer Presse die gegebenenfalls durch Einlagen zusätzlich einstellbare, wirksame Höhe der Einsatzteile so gewählt ist, daß sie bei jeder vorkommenden Dicke eines eingelegten zugeschnittenen Schweinebauches auch nach dem Preßvorgang über den oberen Wannenrand vorstehen und den Preßdruck von der jeweils aufgesetzten Wanne auf das Preßgut der unteren Wanne übertragen.

## Claims

1. Method of producing bacon, in particular for casings or coverings of meat and meat products, e.g. sausages, **characterised in that** belly of pork is boned, cut, injected with brine, tumbled and cold-smoked at a chamber temperature below 48° C, in particular about 40° C for several e.g. 5 to 6 hours, subsequently by pressing into moulds and storing in the mould said belly of pork is stored at cold temperatures below -10° C and after removal from the mould is held at a core temperature below the freezing point, e.g. at -5 to -8° C, so that in this condition it can be cut into slices or strips less than 2 mm in thickness, preferably 1.2 to 1 mm in thickness.

2. Method as claimed in claim 1, **characterised in that** pressing moulds are used in the form of troughs which are rectangular-prismatic in their basic form and have individual parts, in particular insert covers, which fit into the trough opening and are intended for the covering on the cut belly of pork inserted into the trough, wherein in order to stack the loaded troughs in a press, the effective height of the individual parts which can be additionally adjusted optionally by means of inserts is selected in such a manner that for every possible thickness of an inserted, cut belly of pork said individual parts protrude over the upper trough edge even after the pressing procedure and transfer the forming pressure from the respective trough placed on top to the product to be pressed in the lower trough.

## Revendications

1. Procédé de préparation de lard, en particulier pour des enveloppements ou des garnitures de viande et de produits à base de viande, par exemple des saucisses, **caractérisé en ce que** la poitrine du porc est désossée, découpée, injectée de saumure, malaxée, et fumée à froid, à une température de chambre inférieure à 48°C, en particulier d'environ 40°C, pendant quelques heures, par exemple 5 à 6 heures, puis, par pressage dans des moules et stockage dans le moule à des températures de refroidissement inférieures à -10°C et, après prélèvement hors du moule, maintenue à une température à coeur inférieure au point de congélation, par exemple à -5 à - 8°C, de manière que, en cet état, elle puisse encore être découpée en tranches ou en bandes d'épaisseur inférieure à 2 mm, de préférence de 1,2 à 1 mm.

2. Procédé selon la revendication 1, **caractérisé en ce que** l'on utilise comme moule de pressage des auges, à forme de base prismatique-rectangulaire, avec des pièces d'insert, en particulier un couvercle d'insert, s'adaptant dans l'ouverture d'auge, ces dernières étant conçues pour être posées sur la poitrine de porc découpée, insérée dans l'auge, sachant que pour l'empilage des auges garnies dans une presse, la hauteur efficace, réglable en plus le cas échéant par des pièces intercalaires, des pièces d'insert est choisie telle qu'elles, pour toute épaisseur, se présentant, d'une poitrine de porc découpée et insérée, également après le processus de pressage, ressortent du bord d'auge supérieur et qu'elles transmettent la pression de pressage de l'auge chaque fois posée au-dessus au produit de pressage de l'auge de dessous.
